# EUROPEAN PATENT APPLICATION

(11) **EP 2 523 410 A2**
(43) Date of publication of application: **14.11.2012**
(21) Application number: 12167645.6
(22) Date of filing: 11.05.2012
(51) Int. Cl.: H04L 12/58

(54) **System and method for promoting multi-layer-forwarding messages**

(30) Priority: 13.05.2011 US 201161485643 P; 28.12.2011 TW 100149215
(71) Applicant: Industrial Technology Research Institute, Chutung Hsinchu 31040 (TW)
(72) Inventor: Kuo-Yu, Chuang, 265 Yilan County (TW); Jen-Chu, Liu, 911 Pingtung County (TW); Johannes Hermanus, Fouche, 434 Taichung City (TW); Chih-Jen, Wu, 830 Kaohsiung City (TW)
(74) Representative: von Kreisler Selting Werner

(57) **Abstract**

A system and a method for promoting multi-layer forwarding messages are provided. An embodiment of the method for use in an advertisement server system includes the following steps. At least one feedback message is received, wherein each of the at least one feedback message includes a forwarding user identifier and a user identifier of a corresponding first receiving device, and the advertisement server system interprets the at least one feedback message as a first-layer forwarding of an advertisement message associated with the forwarding user identifier. The forwarding number of the first-layer forwarding of the advertisement message is stored according to at least one feedback message of the first-layer forwarding of the advertisement message. An encouraging message is sent to a forwarding mobile device of the forwarding user identifier, wherein the encouraging message includes information based on a forwarding weight is determined according to at least the forwarding number.

## Description

### BACKGROUND

### Technical Field

The disclosed embodiments relate in general to a system and a method for promoting multi-layer forwarding messages.

### Description of the Related Art

Currently, many vendors prefer to send advertisement and discount messages via short message service. An advertisement sender would like to have advertisement messages be sent out quickly for catching the message receivers' attention and for promoting consumption. However, more and more people do not like to receive mass messages which are regarded as spams. Thus, the effect of sending advertisement messages in the form of short messages to catch the message receivers' attention and promote consumption is not satisfactory. The practice of sending advertisement messages to many receivers from the vendors does not work well.

### SUMMARY

The disclosure is directed to a system and a method for promoting multi-layer forwarding messages between mobile devices.

According to one embodiment, a method for promoting multi-layer forwarding messages between mobile devices is provided. The method includes the following steps. In step (sa), at least one feedback message is received by an advertisement server system, wherein each of the at least one feedback message includes a forwarding user identifier and a corresponding first receiving user identifier of a corresponding first receiving device, the advertisement server system receives the feedback message from the corresponding first receiving device of the corresponding first receiving user identifier, and the advertisement server system interprets the at least one feedback message as a first-layer forwarding of an advertisement message associated with the forwarding user identifier. In step (sb), a first forwarding number of the first-layer forwarding of the advertisement message is recorded to the advertisement server system according to the at least one feedback message of the first-layer forwarding of the advertisement message. In step (sc), an encouraging message is sent to a forwarding mobile device of the forwarding user identifier from the advertisement server system, wherein the encouraging message includes information based on a forwarding weight determined according to at least the first forwarding number.

According to another embodiment, a system for promoting multi-layer forwarding messages between mobile devices is provided. The system includes: a receiving unit, a storage unit, a processing unit and a sending unit. The receiving unit receives at least one feedback message, wherein each of the at least one feedback message includes a forwarding user identifier and a corresponding first receiving user identifier of a corresponding first receiving device, the advertisement server system receives the feedback message from the corresponding first receiving device of the corresponding first receiving user identifier, and the advertisement server system interprets the at least one feedback message as a first-layer forwarding of an advertisement message associated with the forwarding user identifier. The processing unit, coupled to the receiving unit and the storage unit, records a first forwarding number of the first-layer forwarding of the advertisement message to the storage unit according to the at least one feedback message of the first-layer forwarding of the advertisement message. The sending unit sends an encouraging message to a forwarding mobile device of the forwarding user identifier, wherein the encouraging message includes information based on a forwarding weight determined according to at least the first forwarding number.

According to an alternative embodiment, a method for promoting multi-layer forwarding messages between mobile devices for use in a mobile device is provided. The method includes the following steps. An advertisement message having a text portion and a network resource locating portion is provided. At least one piece of location information is obtained from the advertisement message. The at least one piece of location information is converted into at least one corresponding hyperlink according to the network resource locating portion. An information request is sent to a server system according to the at least one hyperlink. Response data is received from the server system. At least one user interface for forwarding the advertisement message is displayed on a user interface of a mobile device according to the response data. A message based on the advertisement message is forwarded to at least one receiving mobile device of at least one user identifier in response to a forwarding confirmation sent from the user interface. A forwarding number of the forwarding action is recorded. An encouraging message based on the forwarding number is displayed.

The above and other aspects of the disclosure will become better understood with regard to the following detailed description of the preferred but non-limiting embodiment(s). The following description is made with reference to the accompanying drawings.

### BRIEF DESCRIPTION OF THE DRAWINGS

FIG. 1 shows an embodiment of a platform architecture for promoting multi-layer forwarding messages between mobile devices.

FIG. 2 shows a flowchart of an embodiment of a method for promoting multi-layer forwarding messages between mobile devices.

FIG. 3 shows a flowchart of an embodiment of a method for promoting multi-layer forwarding messages between mobile devices.

FIG. 4 shows a sequence diagram of an embodiment of the interaction between the advertisement server system 10 and the mobile devices of the platform architecture of FIG. 1.

FIG. 5 shows a block diagram of an embodiment of a system for promoting multi-layer forwarding messages between mobile devices.

FIG. 6 shows an embodiment of the contents of an advertisement message.

FIG. 7 shows a sequence diagram of another embodiment of the interaction between the advertisement server system 10 and the mobile devices of the platform architecture of the FIG. 1.

FIG. 8 shows a sequence diagram of an alternate embodiment of the interaction between the advertisement server system 10 and the mobile devices of the platform architecture of the FIG. 1.

FIG. 9 shows another embodiment of the platform FIG. 1.

FIG. 10 shows a message flowchart of a method executed by a mobile device of the platform architecture of FIG. 9.

FIG. 11 shows an embodiment of a user interface executed by a mobile device of the platform architecture of FIG. 9.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

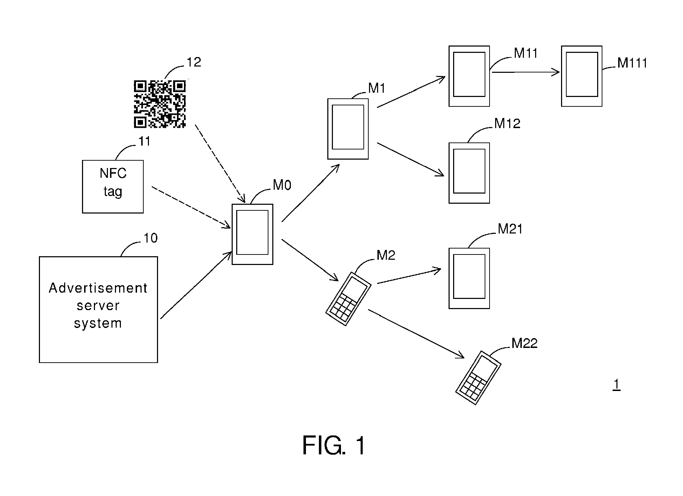

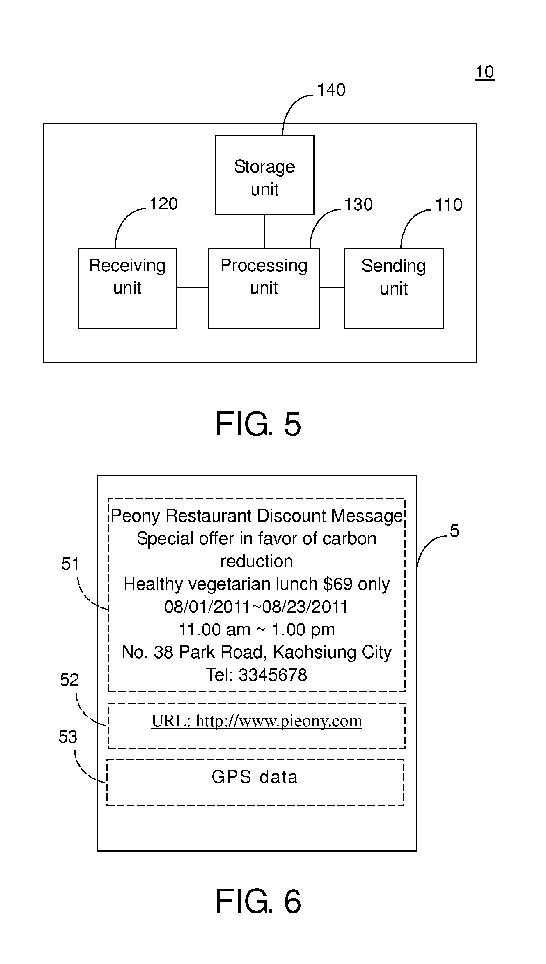

The embodiment provides a system and a method for promoting multi-layer forwarding messages between mobile devices. FIG. 1 shows an embodiment of a platform architecture for promoting multi-layer forwarding messages between mobile devices. As indicated in FIG. 1, the platform 1 includes an advertisement server system 10 and mobile devices (such as mobile devices M0 and M1) for promoting multi-layer forwarding of messages (such as advertisement messages) between mobile devices. In the platform 1, the forwarding of an advertisement message is initiated by a mobile device which receives an advertisement message from the exterior. The mobile device, such as mobile device M0, is referred as a forwarding mobile device hereinafter. The mobile device M0 receives an advertisement message provided by the advertisement server system 10. Alternatively, the mobile device M0 obtains the advertisement message by way of reading a near field communication (NFC) tag 11 (such as a poster or an object having an NFC tag) or a two-dimensional barcode 12 (such as a quick response (QR) code printed on a computer picture or a printed matter). As indicated in the embodiment of FIG. 6, the advertisement message 5 includes a text portion 51 and a network resource locating portion 52 such as an URL. In other embodiments, the advertisement message 5 may further include other data such as a GPS data 53. The format of the advertisement message is not limited to the above exemplifications. For example, the network resource locating portion 52 may appear between the characters of the text portion 51 or before the text portion 51.

After receiving an advertisement message, if the mobile device M0 decides to forward the advertisement message or the message based thereon (such as recommendation) to other mobile devices such as the mobile devices M1 and M2 (referred as receiving devices or receiving mobile devices), then the advertisement message may be forwarded to the mobile devices of other users. In general, advertisement messages are forwarded to acquaintances, friends or relatives who are less likely to reject, and such promotion is more likely to be accepted. Examples of mobile devices include smart mobile phone, mobile phone, tablet PC, notebook computer, and e-book.

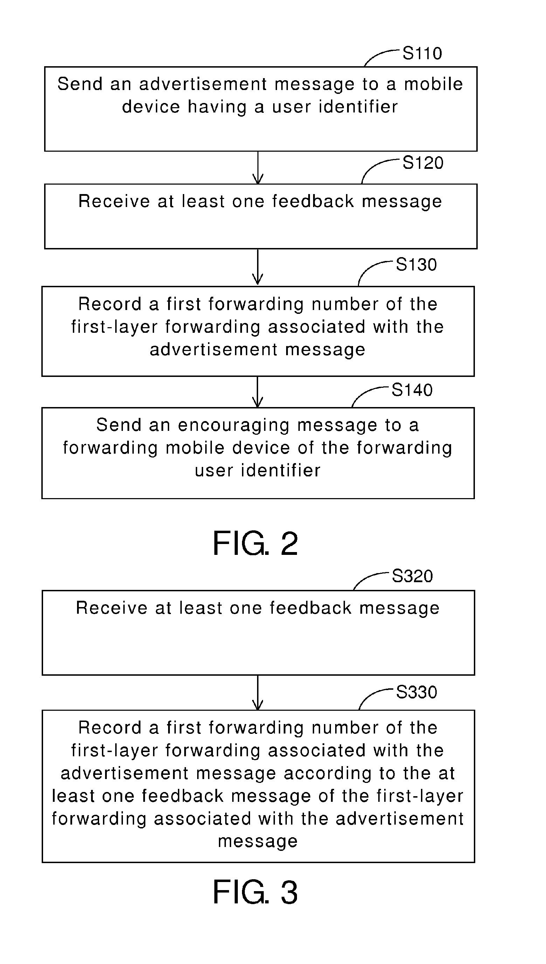

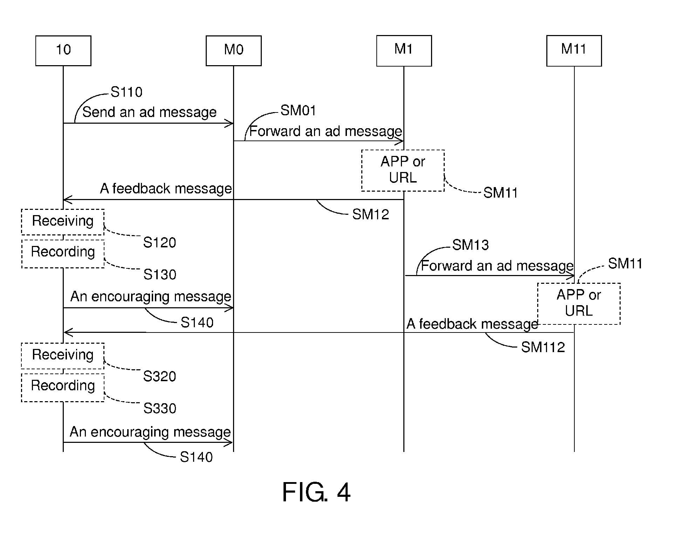

The advertisement server system 10 is used for promoting forwarding, generates an encouraging message with respect to the forwarding of an advertisement message and further forwards the encouraging message to the mobile device of the forwarding user. The forwarding user, being rewarded according to the weight based on the forwarding number or being informed of the coming reward, is more willing to forward the advertisement message. FIG. 2 shows a flowchart of an embodiment of a method for promoting multi-layer forwarding messages between mobile devices. The embodiment of the method of FIG. 2 is applicable to the advertisement server system 10 for promoting multi-layer forwarding messages between mobile devices. Referring to FIG. 4, a sequence diagram of an embodiment of the interaction between the advertisement server system 10 and the mobile devices of the platform architecture of the FIG. 1 is shown. The present embodiment is exemplified by the mobile device M0 obtaining an advertisement message from the advertisement server system 10.

In step S110 of FIG. 2, the advertisement server system 10 sends an advertisement message to a mobile device M0 having a user identifier ID0 (referred as forwarding user identifier hereinafter), wherein the advertisement message includes a text portion and a network resource locating portion as indicated in FIG. 6. The user identifier ID is an identifier for forwarding the message to a corresponding user or mobile device M0. Examples of the identifier include mobile phone number or instant messaging network account or social networking account or other network address for positioning or the user's alias name. Referring to FIG. 4. After receiving an advertisement message (indicated by arrow SM01), the mobile device M0 forwards the advertisement message to other user such as the mobile device M1 having user identifier ID1. The forwarded advertisement message mentioned hereinafter may be regarded as being the same with the original advertisement message or the alteration/addition/deletion based on the original advertisement message, and the network resource locating portion 52 is still maintained in the forwarded advertisement message. The mobile device M1 has access to the network and has webpage browsing function. After receiving the forwarded advertisement message (indicated by the dotted block SM11), the receiver of the mobile device M1 may click the network resource locating portion 52 (such as URL) for connecting the mobile device M1 to the host and sending a feedback message (indicated by the arrow SM12 in the format like HTML, HTML5, XML) through the webpage technology or the URL parameters in response to the forwarding information. For example, the URL sent by the mobile device M1 is:
http://www.pieony.com/feedback?ad=0001&sender=0999123456&receiver=09 00123456

The above URL indicates that with respect to the advertisement message 0001, the mobile phone number of the forwarder being 0999123456 and the mobile phone number of the receiver being 0900123456 are forwarded to the website http://www.pieony.com. In another embodiment, an application program (APP), used for implementing the function indicated by the dotted block SM11 or implementing other network data forwarding technology, may be installed and executed on the mobile device M1 for sending a feedback message as indicated by the arrow SM12 when the forwarded advertisement message is received by the mobile device M1.

In step S120 of FIG. 2, at least one feedback message is received by an advertisement server system 10, wherein each of the at least one feedback message includes a forwarding user identifier ID0 and a corresponding first receiving user identifier of a corresponding first receiving device. The advertisement server system 10 receives the feedback message from the corresponding first receiving device of the corresponding first receiving user identifier, and interprets the at least one feedback message as a first-layer forwarding of an advertisement message associated with the forwarding user identifier. Step S120 may cover many situations. For example, after the mobile device M0 transfers an advertisement message to the mobile device M1, the mobile device M1 sends a feedback message to the advertisement server system 10. In another example, the mobile device M0 forwards an advertisement message to many users, such as the mobile devices M1 and M2 or other mobile devices. In step S120, the advertisement server system 10 may receive a plurality of feedback messages respectively or concurrently. The mobile devices receiving the advertisement message from the first-layer forwarding of the mobile device M0 (that is, the forwarding mobile device of the forwarding user identifier) are referred as the first receiving devices (such as the devices M1 and M2) in step S120. Thus, when processing one or a plurality of the above feedback messages, the advertisement server system 10 interprets the at least one feedback message as a first-layer forwarding of a forwarding user identifier ID0 (with respect to the user of the mobile device M0) associated with the advertisement message.

In step S130 of FIG. 2, a first forwarding number of the first-layer forwarding associated with the advertisement message is recorded to the advertisement server system 10 according to the at least one feedback message of the first-layer forwarding associated with the advertisement message. Step S130 covers many situations, and may be implemented in many different ways. For example, as indicated in FIG. 4, the mobile device M1 sends a feedback message (indicated by the arrow SM12), and the advertisement server system 10 receives the feedback message, records the situation of the current forwarding, and further adds the count to the first forwarding number. In another example, the mobile device M0 forwards an advertisement message to many users such as the mobile devices M1 and M2 or other mobile devices, records the situation of the current forwarding with respect to the feedback message sent from the first receiving devices respectively or concurrently, and adds the count to the first forwarding number. The above steps S120 and S130 indicate that many feedback messages are received and recorded in different sequences. For example, after the advertisement server system 10 receives a feedback message from the mobile device M1 for a period of time, the advertisement server system 10 then receives a feedback message from the mobile device M2. Thus, steps S120 and S130 cover the situation that the advertisement server system 10 receives and records two feedback messages in sequence.

In step S140 of FIG. 2, an encouraging message is sent to a forwarding mobile device M0 of the forwarding user identifier ID0 from the advertisement server system 10 (through such as short message, webpage or social networking). The encouraging message includes information based on a forwarding weight determined according to at least the first forwarding number. In other words, the forwarding number affects the value of the forwarding weight, and the encouraging message based on forwarding weight provides reward for the forwarding of advertisement messages. For example, the larger the forwarding weight, the more privilege or discount the forwarder will be rewarded. The forwarding weight is determined according to at least the first forwarding number, or the accumulated total forwarding number of multi-layer forwarding, or the weighted sum of respective forwarding number for the forwarding of each layer.

Step S140 of FIG. 2 which covers different implementations of execution timing may be implemented in different ways. For example, whenever the advertisement server system 10 receives a feedback message or the first forwarding number or the accumulated total forwarding number reaches a particular value or meets a particular design condition n, the advertisement server system 10 executes step S140 for sending an encouraging message to encourage the user of the forwarding user identifier ID. In another example, the advertisement server system 10 executes step S140 only when the advertisement server system 10 receives the feedback message of the second-layer forwarding (or multi-layer forwarding). As indicated by the arrow SM13 of FIG. 4, the mobile device M1 forwards an advertisement message to another mobile device M11. The mobile device M11 sends a feedback message as indicated by the arrow SM112 according to the manner indicated by the dotted block SM11. Referring to FIG. 3, a flowchart of an embodiment of a method for promoting multi-layer forwarding messages between mobile devices is shown. In step S320, at least one feedback message is received by the advertisement server system 10, wherein each of the at least one feedback message includes a corresponding first receiving user identifier (such as the user identifier ID1 of the user of the mobile device M1) and a corresponding second receiving user identifier of a corresponding second receiving device (such as the user identifier ID11 of the user of the mobile device M11). The advertisement server system 10 receives the feedback message from the corresponding second receiving device of the corresponding second receiving user identifier (such as the mobile devices M11 and M12), and interprets the at least one feedback message as a second-layer forwarding associated with the advertisement message. In step S330, a second forwarding number of the second-layer forwarding associated with the advertisement message is recorded to the advertisement server system 10 according to the at least one feedback message of the second-layer forwarding associated with the advertisement message. As indicated in FIG. 1, if each of the mobile devices M11, M12, M21 and M22 sends a feedback message, then the second forwarding number recorded to the advertisement server system 10 is 4. After step S330 is executed, as indicated in FIG. 4, step S140 may then be executed. The forwarding weight of step S140 is determined according to at least one of the first forwarding number and the second forwarding number, or the total forwarding number or the weighted sum of respective forwarding number for the forwarding of each layer.

The relationships between the forwarding weight and the forwarding number of step S140 are exemplified below. The example of Table 1 is based on the total forwarding number.

**Table 1**

| Total Forwarding Number | Forwarding Weight | Discount |
|---|---|---|
| 3 | 1 | 5% |
| 10 | 2 | 10% |
| 20 | 3 | 20% |

For example, when the total forwarding number (Sfw) reaches the advertisement server system 10, the forwarding weight (FW) is 2, and the corresponding discount is 10% off. As indicated in FIG. 1, if each of the receiving devices associated with the forwarding originated from the mobile device M0 sends a feedback message to the advertisement server system 10, then the total forwarding number Sfw is 7, the forwarding weight is 1, and the corresponding discount is 5%. By the same analogy, the forwarding weight may be expressed as: FW=f(Sfw), wherein FW denotes the forwarding weight, and the corresponding relationship f() is a step-level function of Table 1. The corresponding relationship may also be expressed as FW=c1*Sfw.

In the example of Table 2, the forwarding weight is determined according to the first forwarding number (Nfw1) and other forwarding number (Mfw) (or the second forwarding number or the total number after the first-layer forwarding).

**Table 2**

| First Forwarding Number | Other Forwarding Number | Forwarding weight | Discount |
|---|---|---|---|
| 3 | 0 | 1 | 5% |
| 3 | 8 | 2 | 10% |
| 3 | 20 | 3 | 20% |
| 10 | 0 | 2 | 10% |

As indicated in Table 2, the forwarding weight may be expressed as: FW=f1(Nfw1)+f2(Mfw), wherein FW denotes the forwarding weight, the value of the forwarding weight may be obtained from the weighted sum, and the corresponding relationships f1() and f2() are designed according to the needs.

Furthermore, the forwarding number of the embodiment is obtained by counting effective forwarding. Effective forwarding refers to the instance that the advertisement server system 10 successfully receives a feedback message and the receiving device (that is, the user) has never received the advertisement message before. Effective forwarding may be estimated and determined from the feedback message received in step S120 and the record of step S130.

In other embodiments, the advertisement server system 10 may be regarded as a server system of advertisement operation used as an operation platform capable of forwarding advertisement messages for one or more advertisers and realized as a mechanism capable of charging advertisers. For example, the method of the above embodiment may further include: generating an advertisement payment message (such as webpage, short message, e-mail). The advertisement payment message includes information based on an advertisement payment value and is determined according to at least the first forwarding number and the second forwarding number such as the total forwarding number or the weighted sum thereof. The advertisement payment value (ADP) may be expressed as: ADP=F(Sfw) or ADP =F1(Nfw1)+F2(Mfw), wherein F(), F1(), F2() are corresponding relationships. Besides, the advertisement payment value associated with a particular advertisement message is calculated according to the total forwarding number of the forwarding users of many mobile devices such as the mobile device M0. In another example, the total forwarding numbers associated with respective advertisement messages of a particular advertisement agent are calculated for calculating the advertisement payment value. In another example, the advertisement payment value associated with other sources of advertisement message such as the NFC tag 11 or the QR code 12 of FIG. 1 is calculated according to respective numbers and manufacturing costs. In practical application, the timing for executing the advertisement payment message is determined according to actual needs. For example, the advertisement payment message is sent out every period of time or whenever a certain condition is met. Alternatively, the advertisement agent may visit the webpage of the advertisement server system 10 to inquire the message of advertisement payment.

In the following embodiments, the operation of the mobile device M0, the method of FIG. 2, and the various implementations of the advertisement server system 10 are exemplified by sending the advertisement message to the mobile device M0 by the advertisement server system 10 in the form of short message.

Referring to FIG. 5, a block diagram of an embodiment of a system for promoting multi-layer forwarding messages between mobile devices is shown. The advertisement server system 10 such as includes a sending unit 110, a receiving unit 120, a processing unit 130 and a storage unit 140. The sending unit 110 may be used for implementing steps S110 and S140. The receiving unit 120 may be used for implementing step S120. The processing unit 130 may be used for implementing step S130 and recording the forwarding number to the storage unit 140. In addition, the advertisement message may be stored to the storage unit 140. In an embodiment, the advertisement server system 10 is a server host for managing user data, receiving a webpage request (such as HTTP request), determining a feedback weight, and forwarding an advertisement message. The advertisement server system 10 may be constructed by any operating system and connected to a telecommunication network such as a mobile communication network (such as 2G, 3G or 4G) or a wireless Internet. For example, the advertisement server system 10 may be connected to a mobile communication network (such as 2G, 3G) via the Internet for sending an advertisement message to a mobile device M0 supporting the mobile communication network in the form of short message. The sending unit 110 has a telecommunication hardware device for connecting with an external network. The sending unit 110 and the receiving unit 120 may be combined as a telecommunication unit. As indicated in FIG. 5, the advertisement message at least includes a text portion 51 and a network resource locating portion 52 such as an URL. In some embodiments, the advertisement server system 10 may be realized by a distributed server system including many servers, wherein each unit may be realized as a server of a local network. Also, the advertisement server system 10 may be realized by a cloud computing system, and each unit may be a server of the cloud.

The operations of the mobile device M0 under different implementations are exemplified below.

### First Embodiment

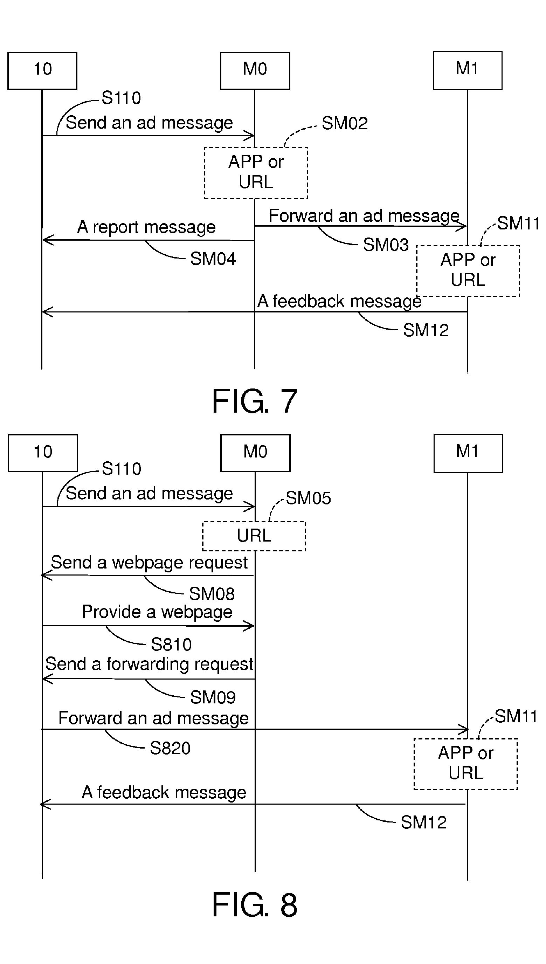

In the present embodiment, an application program (APP) used for implementing the function indicated by a dotted block SM11 or other network data forwarding technology may be installed and executed on the mobile device M0. The mobile device M0 may be realized by a smart device such as a mobile phone, a tablet PC or a device (such as a GPS device) having mobile communication function. Referring to FIG. 7, after the mobile device M0 receives a forwarded advertisement message as indicated by the dotted block SM02, the application program (APP) may analyze the content of the advertisement message and provide a user interface capable of forwarding messages. Via the user interface, the user of the mobile device M0 may select target receivers of the advertisement message from the contact list or other lists of the mobile device M0, input the user identifier, or edit the content of the advertisement message before forwarding the advertisement message. After forwarding the advertisement message (as indicated by the arrow SM03), the mobile device M0 sends a report message by the application program APP via the Internet as indicated by the arrow SM04. The report message includes information related to forwarding, such as the user identifier ID0 of the mobile device M0 and the user identifier ID1 of a receiving device (such as the mobile device M1).

### Second Embodiment

In the present embodiment, the mobile device M0 is not equipped with an application program (APP) but has Internet access function. Moreover, the web browser of the mobile device M0 supports such as the script program or HTML5, and may use a browser program for executing function such as forwarding advertisement message on the mobile device M0. When the mobile device M0 sends a webpage request from such as the URL of an advertisement message, the webpage replied by the website contains the programming code (such as the script program or HTML5) of the forwarding program. By executing the forwarding program of the browser, the user may select target receivers of the advertisement message from the contact list or other lists of the mobile device M0, input the user identifier, or edit the content of the advertisement message before forwarding the advertisement message. After forwarding the advertisement message (as indicated in the arrow SM03), the mobile device M0 may use the forwarding program executed on the browser for sending a report message via the Internet, as illustrated in arrow SM04.

### Third Embodiment

In the present embodiment, the mobile device M0 is not equipped with an application program (APP) but has Internet access function. Moreover, the web browser of the mobile device M0 does not support such as the script program or HTML5, and is incapable of executing the function such as forwarding advertisement message as disclosed in the second embodiment. Under such circumstances, the mobile device M0 may be realized by a mobile phone providing WAP Internet access or a 3G mobile phone having Internet access. In the present embodiment, the advertisement server system 10 provides forwarding function and forwards the advertisement message to other users in the name of the user identifier ID0 of the mobile device M0. Referring to FIG. 8, as indicated by the dotted block SM05, the mobile device M0 sends a webpage request (such as an HTTP request) as indicated by the arrow SM08 from the network resource locating portion (such as URL) of an advertisement message. In step S810, the advertisement server system 10, in response to the webpage request corresponding to the forwarding user identifier, provides at least one webpage to the mobile device M0 of the user identifier ID0. The at least one webpage provides a user interface capable of forwarding message. Via the user interface, the user of the mobile device M0 may select target receivers of the advertisement message from the contact list or other lists of the mobile device M0, input the user identifier, or edit the content of the advertisement message before forwarding the advertisement message. By operating the user interface on the browser program of the mobile device M0, the user sends a forwarding request as indicated by the arrow SM09. In step S820, the advertisement server system 10, in response to the forwarding request, forwards information based on the advertisement message to at least one mobile device (such as the mobile devices M1 and M2 of FIG. 1) indicated by at least one user identifier. The forwarding request identifies the selected forwarding target or user identifier, or includes user identifier or designation of the forwarding target, so as to indicate the instruction of the mobile device M0 of the user identifier ID0 for forwarding the advertisement message to the at least one mobile device represented by at least one user identifier. Furthermore, when the advertisement server system 10 receives the forwarding request, it is equivalent to that a report message has been received, as illustrated in the first or the second embodiment.

In the first to the third embodiment disclosed above, the advertisement server system 10 may further process or make use of the report message. For example, the advertisement server system 10 may add the count to the first forwarding number. When the mobile device M1 is incapable of connecting to the Internet or is not equipped with an application program for sending a feedback message, the report message may be used for calculating the forwarding number. In addition, the report message may be used with step S210 for identifying the forwarding target or confirming whether the forwarding of advertisement message is successful or not so as to more accurately calculate the behavior of forwarding or design a mechanism for rewarding the forwarding user.

### Fourth Embodiment

In the present embodiment, the mobile device M0 is neither equipped with an application program (APP) nor connected to the Internet, and does not have Internet access function. The mobile device M0 may be realized by a 2G mobile phone, or a mobile phone with basic functions such as making/answering calls or sending/receiving short messages. Under such circumstances, after the mobile device M0 forwards an advertisement message to the mobile device M1, the mobile device M0 is unable to report the information related to the forwarding to the advertisement server system 10 via the Internet. If the mobile device M1 is capable of connecting to the Internet or equipped with an application program APP, the mobile device M1 sends a feedback message as indicated in step S120, and the advertisement server system 10 is able to record the forwarding information, that is the forwarder and the receiver and the accumulated forwarding number. Therefore, the embodiment of the method of FIG. 2 achieves the effect of promoting forwarding messages. In another embodiment, the advertisement server system 10 has the function of sending/receiving short messages. After the mobile device M0 forwards an advertisement message to the mobile device M1, the mobile device M0 may send a report message, as exemplified above, to the advertisement server system 10 in the form of short messages.

In the first to the fourth embodiment, the advertisement message is forwarded in the form of short messages. However, in other embodiment, the forwarding of advertisement messages between the mobile devices of FIG. 1 may also be achieved by way of NFC tag, Bluetooth or application program (Applet) of the mobile phone, mobile web page or social networking account (such as Facebook, MSN).

Besides, in the embodiment of the method of FIG. 2, the definition of the forwarding mobile device is not limited to the mobile device M0 as indicated in FIG. 1. In other embodiments, the advertisement server system 10 may regard other mobile device (such as mobile device M1 or M11) as a forwarding mobile device, and calculates the forwarding number of the mobile device M1 or M11 according to steps S120-S140 of FIG. 2, and sends an encouraging message to the mobile device M1 or M11.

### Fifth Embodiment

Other implementations of the first and the second embodiment are exemplified below. For example, the application program APP (or browser program) of the mobile device M0 may analyze the content of short message, e.g., by parsing the content and extracting related information therefrom, and send a webpage request to the advertisement server system 10 based on the analysis. The advertisement server system 10 may send other information (such as the map and the discount message) related to the content of advertisement to the mobile device M0. Therefore, from the user's perspective, the interaction between the mobile device M0 and the advertisement server system 10 is more straightforward, and it is easier for the user to understand the advertisement message so that the user will be more willing to forward the advertisement message.

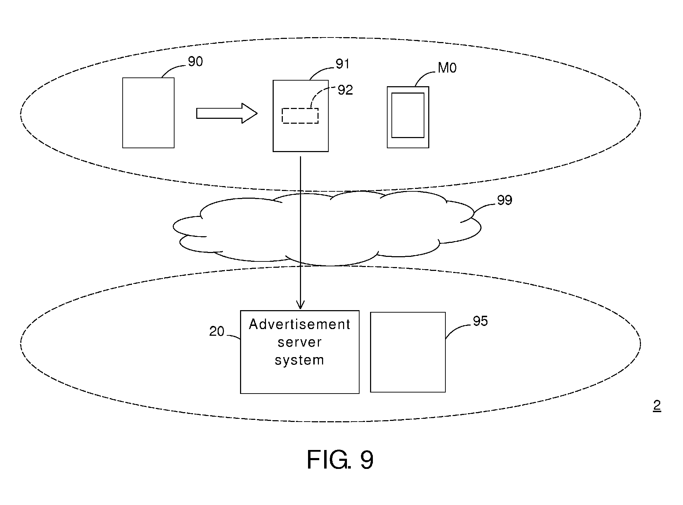

Referring to FIG. 9, another embodiment of the platform FIG. 1 is shown. In the present embodiment, the location information (such as address, landmark or GPS coordinates) of the short message (such as short message 90) may be directly converted into a corresponding electronic map through the platform constructed in the present embodiment of the disclosure and may be displayed on the short message (such as the converted short message 91 of FIG. 9) in the form of a hyperlink. Via the hyperlink, the mobile device may be connected to the platform (such as the advertisement server system 20 of FIG. 9) and the interface (such as the browser program or the application program APP of the mobile device M0) for the user to view the corresponding map and obtain relevant discount information. If the user forwards the message via the platform of the present embodiment of the disclosure (as indicated in FIG. 1), the user will receive more rewards, such as discount or other privilege, according to the forwarding number or weight.

The system architecture of the present disclosure as indicated in FIG. 9 at least includes a server (such as the embodiments of FIG. 5) for receiving short messages, processing location related messages, sending feedback messages, setting factory feedback mechanism and weight, and forwarding short messages. The server may be constructed by any operating system for receiving the short messages forwarded by the mobile device, and may be further connected to the Internet (designated by 99). The function of receiving short messages may be achieved by an external telecommunication module. The functions of processing location related messages, sending feedback messages, setting factory feedback mechanism and weight may be achieved by programming the rules and algorithms as described in the embodiments of the present disclosure. The function of forwarding short messages may be achieved by connecting to the Internet or an external telecommunication module. Any mobile device M0 having the functions of sending/receiving short messages and having a browser for browsing webpages can be applied in the architecture as embodied in the present disclosure. The mobile device may be constructed by any operating system.

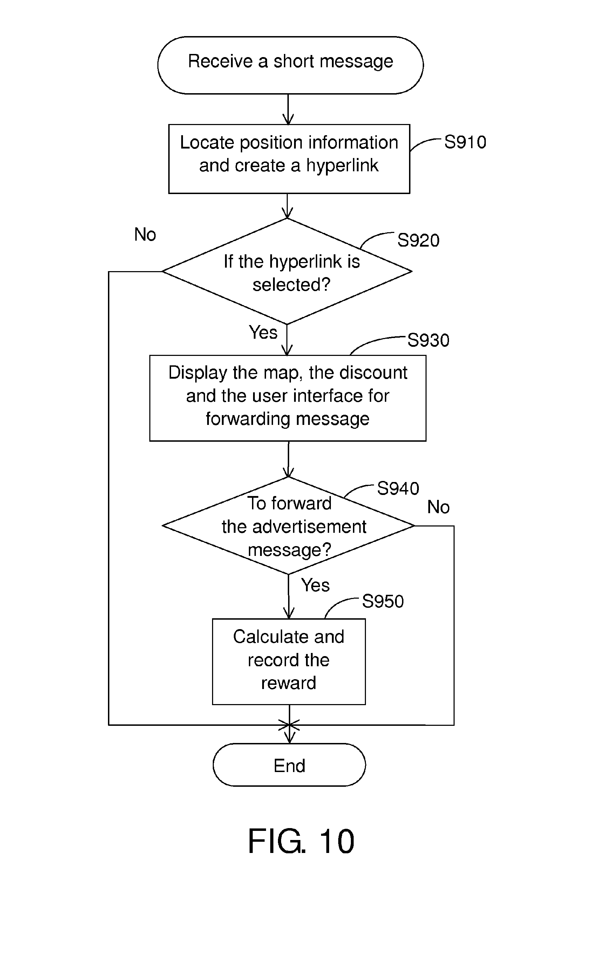

Referring to FIG. 10, a message flowchart of a method executed by mobile devices of the platform architecture of FIG. 9 is shown. The method of the present embodiment of the disclosure at least includes the following steps:

In step S910, after receiving a short message, the application program APP installed on the mobile device M0 locates the address (conformed to the descriptions of address description condition), the landmark (conformed to the descriptions of landmark description condition) or the GPS coordinates (conformed to the descriptions of GPS coordinate description condition) from the short message 90, and create hyperlink from the located information. Let the URL http://www.adsearch.com of the advertisement server system 20 be taken for example. The address located form the short message is ABC. The address is displayed as a hyperlink (such as underlined) by the application program APP. When the hyperlink is clicked by the user, a webpage request immediately sent from the mobile device M0 is expressed as:
http://www.adsearch.com/map?address=ABC.

In step S920, the application program APP may further judge whether the hyperlink is pressed. If no, then the application program terminates or executes other processing. If yes, then the mobile device M0 sends a webpage request as disclosed above.

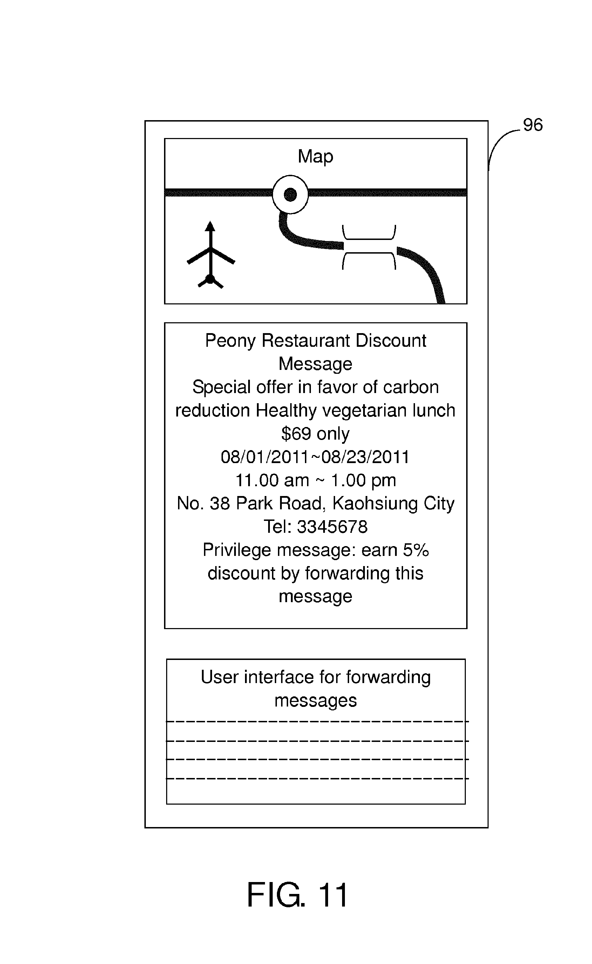

Via the address, landmark or GPS coordinate hyperlink indicated by the dotted squared frame 92, the mobile device may be connected to the advertisement server system 20 of the present embodiment, and the information of address, landmark or GPS coordinates is transmitted together in the form of http request. In response to the corresponding http supply request, the advertisement server system 20 sends at least one webpage or data 95 to the mobile device M0. In step S930, the application program APP may display the map of the location, the discount information and the user interface for forwarding message according to the data as indicated by the frame 96 of FIG. 11. In step S940, whether to forward the advertisement message is judged. If yes, then the advertisement message is forwarded to target receivers. In step S950, the feedback is calculated and recorded.

After the operation interface provided by the above platform forwards messages such as short messages or e-mails, the application program APP of the platform may calculate the privilege according to the number and weight of message forwarding and send the reward to the forwarders. The advertisement server system 10 may judge and obtain the information of successful forwarding according to such as the report message SM04 and the step S120 of the above embodiment, and further uses the obtained information as a basis for calculating the forwarding weight. Different privileges or premiums can be assigned, e.g., for the forwarding behavior or user, according to the forwarding weight, in order to maintain the fairness of rewarding, for example.

Through the feedback mechanism disclosed in the present embodiment of the disclosure, the vendors may make more consumers be informed of the advertisement and discount message, and the short message forwarders may obtain more privileges. Meanwhile, the consumers may easily obtain the location information of the vendors without having to go through complicated searching process, and this is indeed very convenient to the consumers.

The application program APP is used as an exemplification in the fifth embodiment. However, the exemplification of the fifth embodiment is also applicable to an example of the second embodiment and an example of the third embodiment. In the example of the second embodiment, the browser program is used as a user interface for forwarding advertisement messages. In the example of the third embodiment, the advertisement server system 10 uses the browser program for forwarding advertisement messages.

Also, the fifth embodiment discloses a method for promoting multi-layer forwarding messages for use in a mobile device. The method includes the following steps. An advertisement message including a text portion and a network resource locating portion is received. At least one piece of location information is obtained from the advertisement message, e.g., by way of analysis the advertisement message with text parsing and extraction. The at least one piece of location information is converted into at least one corresponding hyperlink according to the network resource locating portion. An information request is sent to a server system, e.g., a web-based server system such as an advertisement server system as exemplified above, according to the at least one hyperlink. Response data of the server system is received. At least a user interface for forwarding the advertisement message is displayed on a user interface of the mobile device according to the response data. A message based on the advertisement message is forwarded to at least one receiving mobile device of at least one user identifier in response to a forwarding confirmation sent from the user interface. A forwarding number of the forwarding action is recorded. An encouraging message including information based on the forwarding number is displayed on the user interface of the mobile device. In another embodiment, at least the user interface for forwarding the advertisement message and the response data are displayed on the user interface of the mobile device according to the response data. The response data includes map data, traffic data or attached data associated with the at least one piece of location information. The map data is such as the map covering the vicinity of the destination. The traffic data is such as the planning or information associated with the route or transport from the current address to the destination. The attached data is such as the discount information or any other relevant data. The response data is displayed in the form of image, text or a combination of text and image, as illustrated in FIG. 11.

A number of embodiments of a system and a method for promoting multi-layer forwarding messages are disclosed above. In some embodiments of the system for promoting multi-layer forwarding messages, the encouraging messages are effectively sent out according to the forwarding number for promoting the multi-layer forwarding between mobile devices so as to change the users' behaviors. Some embodiments show that the system and the mobile device provide a platform for promoting multi-layer forwarding messages and are more flexible in terms of implementation. The first to the fifth embodiments may also be applicable to different types of mobile devices. In some embodiments, the system and the method for promoting multi-layer forwarding messages are also applicable to mobile devices, and are capable of displaying more relevant information (such as map, discount information or reward information) in a more convenient way to give users better user experience and make them more willingly to forward relevant advertisement messages. In some embodiments, the advertisement payment may also be calculated precisely.

It will be apparent to those skilled in the art that various modifications and variations can be made to the disclosed embodiments. It is intended that the specification and examples be considered as exemplary only, with a true scope of the disclosure being indicated by the following claims and their equivalents.

## Claims

1. A method for promoting multi-layer forwarding messages, comprising:
(sa) receiving at least one feedback message by an advertisement server system, wherein each of the at least one feedback message comprises a forwarding user identifier and a corresponding first receiving user identifier of a corresponding first receiving device, the advertisement server system receives the feedback message from the corresponding first receiving device of the corresponding first receiving user identifier, and the advertisement server system interprets the at least one feedback message as a first-layer forwarding of an advertisement message associated with the forwarding user identifier;
(sb) recording a first forwarding number of the first-layer forwarding of the advertisement message by the advertisement server system according to the at least one feedback message of the first-layer forwarding of the advertisement message; and
(sc) sending an encouraging message to a forwarding mobile device of the forwarding user identifier from the advertisement server system, wherein the encouraging message including information based on a forwarding weight determined according to at least the first forwarding number.

2. The method for promoting multi-layer forwarding messages according to claim 1, wherein with respect to each of the at least one feedback message, the feedback message indicates that the corresponding first receiving device of the corresponding first receiving user identifier obtains the advertisement message from the forwarding mobile device of the forwarding user identifier.

3. The method for promoting multi-layer forwarding messages according to claim 1, further comprising:
(ta) receiving at least one feedback message by the advertisement server system, wherein each of the at least one feedback message includes the corresponding first receiving user identifier and a corresponding second receiving user identifier of a corresponding second receiving device, the advertisement server system receives the feedback message from the corresponding second receiving device of the corresponding second receiving user identifier, and the advertisement server system interprets the at least one feedback message as a second-layer forwarding associated with the advertisement message; and
(tb) recording a second forwarding number of the second-layer forwarding associated with the advertisement message to the advertisement server system according to the at least one feedback message of the second-layer forwarding associated with the advertisement message.

4. The method for promoting multi-layer forwarding messages according to claim 3, wherein the steps (ta) and (tb) are executed before the step (sc), the first encouraging message includes information based on the forwarding weight determined according to at least the first forwarding number and the second forwarding number.

5. The method for promoting multi-layer forwarding messages according to claim 3, wherein the steps (ta) and (tb) are executed after the step (sc), and the method further comprises:
sending a second encouraging message to the forwarding mobile device of the forwarding user identifier from the advertisement server system, wherein the second encouraging message comprises information based on a forwarding weight determined according to at least the first forwarding number and the second forwarding number.

6. The method for promoting multi-layer forwarding messages according to claim 4 or 5, further comprising:
generating an advertisement payment message in the advertisement server system, wherein the advertisement payment message comprises information based on an advertisement payment value determined according to at least one of the first forwarding number and the second forwarding number.

7. The method for promoting multi-layer forwarding messages according to claim 1, wherein before the step (sa), the method further comprises:
(qa) at the advertisement server system, sending the advertisement message to the forwarding mobile device having the forwarding user identifier, wherein the advertisement message includes a text portion and a network resource locating portion.

8. The method for promoting multi-layer forwarding messages according to claim 7, wherein after the step (qa), the method further comprises:
(ra) at the advertisement server system, outputting at least one webpage to the forwarding mobile device of the forwarding user identifier in response to a webpage request corresponding to the forwarding user identifier, wherein the webpage request indicates that the webpage request is outputted by the forwarding mobile device of the forwarding user identifier according to the network resource locating portion of the advertisement message, and the at least one webpage provides a user interface for forwarding the advertisement message; and
(rb) at the advertisement server system, forwarding the information based on the advertisement message to at least one first mobile device indicated by at least one first user identifier in response to a forwarding request, wherein the forwarding request indicates that the forwarding mobile device of the forwarding user identifier requests forwarding the advertisement message to the at least one first mobile device indicated by the at least one first user identifier, and the at least one first user identifier is the at least one first receiving user identifier of the step (sa).

9. The method for promoting multi-layer forwarding messages according to claim 1, wherein before the step (sa), the method further comprises:
receiving at least one report message by the advertisement server system, wherein each of the at least one report message includes a forwarding user identifier and a corresponding first receiving user identifier of a corresponding first receiving device, and the advertisement server system receives the report message from the forwarding mobile device of the forwarding user identifier and interprets the at least one report message as a first-layer forwarding of the advertisement message associated with the forwarding user identifier.

10. A system for promoting multi-layer forwarding messages, comprising:
a receiving unit for receiving at least one feedback message, wherein each of the at least one feedback message including a forwarding user identifier and a corresponding first receiving user identifier of a corresponding first receiving device, and the advertisement server system receives the feedback message from the corresponding first receiving device of the corresponding first receiving user identifier and interprets the at least one feedback message as a first-layer forwarding of an advertisement message associated with the forwarding user identifier;
a storage unit;
a processing unit, coupled to the receiving unit and the storage unit, for recording a first forwarding number of the first-layer forwarding of the advertisement message to the storage unit according to the at least one feedback message of the first-layer forwarding of the advertisement message; and
a sending unit for sending a first encouraging message to a forwarding mobile device of the forwarding user identifier, wherein the first encouraging message includes information based on a forwarding weight determined according to at least the first forwarding number.

11. The system for promoting multi-layer forwarding messages according to claim 10, wherein:
the receiving unit receives at least one feedback message, each of the at least one feedback message comprises the corresponding first receiving user identifier and a corresponding second receiving user identifier of a corresponding second receiving device, and the advertisement server system receives the feedback message from the corresponding second receiving device of the corresponding second receiving user identifier and interprets the at least one feedback message as a second-layer forwarding associated with the advertisement message;
the processing unit records a second forwarding number of the second-layer forwarding associated with the advertisement message to the storage unit according to the at least one feedback message of the second-layer forwarding associated with the advertisement message; and
the sending unit sends a second encouraging message to the forwarding mobile device of the forwarding user identifier, wherein the second encouraging message comprises information based on a forwarding weight determined according to at least the first forwarding number and the second forwarding number.

12. The system for promoting multi-layer forwarding messages according to claim 11, wherein:
the processing unit determines an advertisement payment value according to at least the first forwarding number and the second forwarding number, and generates an advertisement payment message comprising information based on the advertisement payment value.

13. The system for promoting multi-layer forwarding messages according to claim 10, wherein:
the sending unit sends the advertisement message to the forwarding mobile device having the forwarding user identifier, wherein the advertisement message comprises a text portion and a network resource locating portion.

14. The system for promoting multi-layer forwarding messages according to claim 13, wherein after the sending unit sends the advertisement message:
the processing unit outputs at least one webpage to the forwarding mobile device of the forwarding user identifier in response to a webpage request corresponding to the forwarding user identifier, the webpage request indicates that the webpage request is outputted by the forwarding mobile device of the forwarding user identifier according to the network resource locating portion of the advertisement message, and the at least one webpage provides a user interface for forwarding the advertisement message.

15. The system for promoting multi-layer forwarding messages according to claim 13 or 14, wherein after the sending unit sends the advertisement message:
the processing unit controls the sending unit to forward the information based on the advertisement message to at least one first mobile device indicated by at least one first user identifier in response to a forwarding request, wherein the forwarding request indicates that the forwarding mobile device of the forwarding user identifier requests forwarding the advertisement message to the at least one first mobile device indicated by the at least one first user identifier.

16. A method for promoting multi-layer forwarding messages for use in a mobile device, comprising:
receiving an advertisement message comprising a text portion and a network resource locating portion;
obtaining at least one piece of location information from the advertisement message;
converting the at least one piece of location information into at least one corresponding hyperlink according to the network resource locating portion;
sending an information request to a server system according to the at least one hyperlink;
receiving response data of the server system;
displaying at least a user interface for forwarding the advertisement message on a user interface of the mobile device according to the response data;
forwarding a message based on the advertisement message to at least one receiving mobile device of at least one user identifier in response to a forwarding confirmation sent from the user interface;
recording a forwarding number of the forwarding action; and
displaying an encouraging message on the user interface of the mobile device according to the forwarding number, wherein the encouraging message includes information based on the forwarding number.
